(19) Europäisches Patentamt / European Patent Office / Office européen des brevets

(11) **EP 2 725 380 A1**

(12) **EUROPEAN PATENT APPLICATION**

(43) Date of publication:
**30.04.2014 Bulletin 2014/18**

(51) Int Cl.:
*G01S 5/02* *(2010.01)*     *G01S 5/04* *(2006.01)*

(21) Application number: **13189885.0**

(22) Date of filing: **23.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.10.2012 US 201213659360**

(71) Applicant: **Facebook, Inc.**
**Menlo Park, CA 94025 (US)**

(72) Inventor: **Maguire, Yael G.**
**Menlo Park, CA California 94025 (US)**

(74) Representative: **Schröer, Gernot H.**
**Meissner, Bolte & Partner GbR**
**Bankgasse 3**
**90402 Nürnberg (DE)**

(54) **Sensing distance between wireless devices using multiple scales of controlled bandwidth**

(57)     In one embodiment, at each of a plurality of first instances of time, a phase of a first signal at a first frequency from a transmitter is determined. At each of a plurality of second instances of time, a phase of a second signal at a second frequency from the transmitter is determined. A position or velocity of the transmitter is determined based at least in part on the phases of the first and second signals at the first and second instances of time.

FIG. 4B

EP 2 725 380 A1

**Description**

TECHNICAL FIELD

This disclosure generally relates to distance sensing.

BACKGROUND

A wireless mobile device-such as a smartphone, tablet computer, or laptop computer-may include functionality for determining its location, direction, or orientation, such as a GPS receiver, compass, or gyroscope. Such a device may also include functionality for wireless communication, such as BLUETOOTH communication, near-field communication (NFC), or infrared (IR) communication or communication with a wireless local area networks (WLANs) or cellular-telephone network. Such a device may also include one or more cameras, scanners, touchscreens, microphones, or speakers. Wireless mobile devices may also execute software applications, such as games, web browsers, or social-networking applications. With social-networking applications, users may connect, communicate, and share information with other users in their social networks.

SUMMARY OF THE INVENTION

In one embodiment of the invention the method comprises, in particular by one or more computer systems:

at each of a plurality of first instances of time, determining a phase of a first signal at a first frequency from a transmitter;
at each of a plurality of second instances of time, determining a phase of a second signal at a second frequency from the transmitter; and
determining a position or velocity of the transmitter based at least in part on the phases of the first and second signals at the first and second instances of time.

In an embodiment determining the phase of the first signal at the first frequency from the transmitter comprises resolving an ambiguity in the phase of the first signal based on a modulation of the first signal; and determining the phase of the second signal at the second frequency from the transmitter comprises resolving an ambiguity in the phase of the second signal based on a modulation of the second signal; and the modulation of each of the first and second signals is GFSK, DQPSK or DPSK.
In a further embodiment determining a velocity of the transmitter comprises using a recursive estimator.
Preferably the modulation of the first and second signals contains a balanced time at each frequency subcarrier.
In a further embodiment the method further comprises:

at each of a plurality of third instances of time, determining a phase of a third signal at a third frequency from the transmitter, determining the phase of the third signal comprising resolving an ambiguity in the phase of the third signal based on a modulation of the third signal, wherein the modulation of the third signal is GFSK, DQPSK or DPSK and uses the Bluetooth protocol; and
determining a position or velocity of the transmitter based at least in part on the phases of the first, second, and third signals at the first, second, and third instances of time.

Preferably determining a velocity of the transmitter comprises calculating a symmetric average of the velocity of the transmitter based at least in part on the phases of the first, second, and third signals at the first, second, and third instances of time.
In particular, the first instances of time are separated by a first predetermined amount of time; and the second instances of time are separated by a second predetermined amount of time; and the third instances of time are separated by a third predetermined amount of time.
In a further embodiment the modulation of the third signal contains a balanced time at each frequency subcarrier.
In a further embodiment determining a velocity of the transmitter comprises using radio-based doppler estimation.
In advantageous embodiments the position of the transmitter is determined based at least in part on one or more of:

a GPS or GLONAS position estimate;
a WiFi position estimate;
accelerometer, gyroscope or magnetometer information;

a past history of phase information;
a past history of position or velocity estimates; and
a past history of signal-to-noise ratios.

According to a further embodiment of the invention a computing system comprises:

a memory comprising instructions executable by one or more processors; and

the one or more processors coupled to the memory and operable to execute the instructions, the one or more processors being operable when executing the instructions to perform a method according to the invention:

In a further embodiment of the invention a computing system comprises:

a memory comprising instructions executable by one or more processors; and
the one or more processors coupled to the memory and operable to execute the instructions, the one or more processors being operable when executing the instructions to
at each of a plurality of first instances of time, determine a phase of a first signal at a first frequency from a transmitter;
at each of a plurality of second instances of time, determine a phase of a second signal at a second frequency from the transmitter; and
determine a position or velocity of the transmitter based at least in part on the phases of the first and second signals at the first and second instances of time.

Preferably the one or more processors are further operable when executing the instructions to:

resolve an ambiguity in the phase of the first signal based on a modulation of the first signal to determine the phase of the first signal at the first frequency from the transmitter;
resolve an ambiguity in the phase of the second signal based on a modulation of the second signal to determine the phase of the second signal at the second frequency from the transmitter,
wherein the modulation of each of the first and second signals is GFSK, DQPSK or DPSK.

In another embodiment of the system determining a velocity of the transmitter comprises using a recursive estimator.
In another embodiment of the system the modulation of the first and second signals contains a balanced time at each frequency subcarrier.
In a further embodiment the one or more processors is further operable when executing the instructions to:

at each of a plurality of third instances of time, determine a phase of a third signal at a third frequency from the transmitter, wherein determining the phase of the third signal comprises resolving an ambiguity in the phase of the third signal based on a modulation of the third signal, and
wherein the modulation of the third signal is GFSK, DQPSK or DPSK and uses the Bluetooth protocol; and
determine a position or velocity of the transmitter based at least in part on the phases of the first, second, and third signals at the first, second, and third instances of time.

In an embodiment of the system determining a velocity of the transmitter comprises calculating a symmetric average of the velocity of the transmitter based at least in part on the phases of the first, second, and third signals at the first, second, and third instances of time.
Preferably the first instances of time are separated by a first predetermined amount of time; the second instances of time are separated by a second predetermined amount of time; and the third instances of time are separated by a third predetermined amount of time.
The modulation of the third signal preferably contains a balanced time at each frequency subcarrier.
Determining a velocity of the transmitter may also comprise using radio-based doppler estimation.
In an embodiment of the system the position of the transmitter is determined based at least in part on one or more of:

a GPS or GLONAS position estimate;
a WiFi position estimate;
accelerometer, gyroscope or magnetometer information;
a past history of phase information;

a past history of position or velocity estimates; and
a past history of signal-to-noise ratios.

BRIEF DESCRIPTION OF THE DRAWINGS

FIGURE 1 illustrates an example environment including multiple mobile wireless devices.
FIGURE 2 is a plot of two example received signals.
FIGURE 3 is a plot of two example received signals originating from roughly the same location at separate frequencies.
FIGURE 4A illustrates an example method for calculating the distance of a wireless transmitter.
FIGURE 4B illustrates an example method for estimating the range of a signal transmitter or mobile device.
FIGURE 4C illustrates an example method for refining a calculated range estimate by one or more secondary factors.
FIGURE 4D illustrates a plot of how a narrowband modulation can be used to resolve cycle slips from a wider bandwidth modulation.
FIGURE 5A is an example plot of an estimated distance including cycle slips.
FIGURE 5B is an example plot of total accumulated phase including cycle slips.
FIGURE 6 illustrates an example inertial model for estimating the movement of a wireless transmitter.
FIGURE 7 illustrates an example computing system.

DESCRIPTION OF EXAMPLE EMBODIMENTS

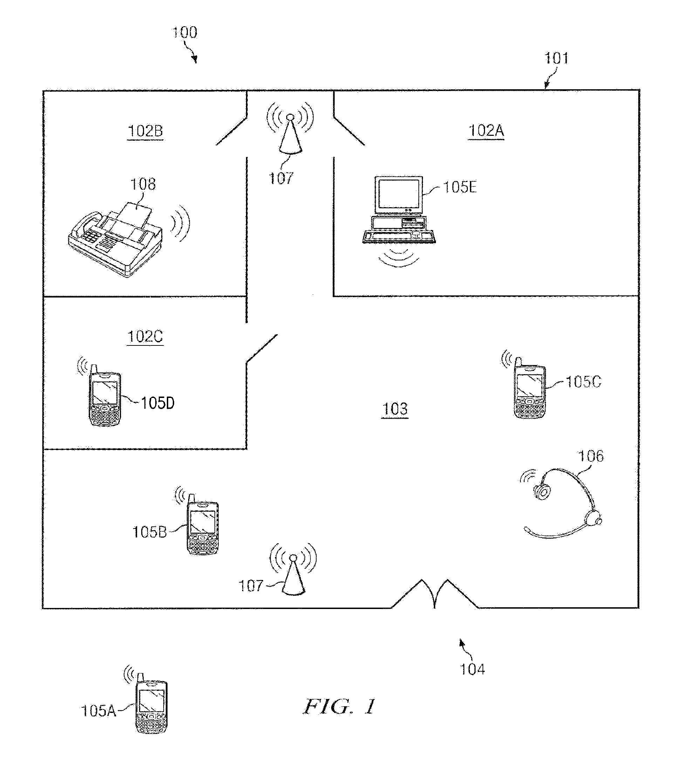

FIGURE 1 illustrates an example environment including multiple wireless devices. In the example of FIGURE 1, the environment 100 includes indoor region 101 and outdoor region 104 populated with a plurality of wireless mobile devices 105A-E. In outdoor region 104, mobile devices, such as wireless mobile device 105A, have an unobstructed line of sight (LOS) to global positioning system (GPS) satellites. Thus, wireless mobile device 105A may calculate its own position from received GPS signals with great accuracy, generally on the order of 1 meter. Additionally, mobile devices with accurate GPS location data may exchange their location with other devices, and as such may be aware of the location of other devices in the immediate vicinity for location based services (LBS). However, due to path loss, wireless mobile devices 105B-E cannot accurately calculate their own positions via GPS triangulation. Additionally, in close-range environments such as environment 100, mobile devices 105A-E are simply too close to each other to perform TDoA triangulation absent extremely fine resolution timers(on the order of one nanosecond).

Wireless mobile devices 105A-E transmit signals via one or more wireless communication protocols. In particular embodiments, wireless mobile devices 105A-E transmit signals in accordance with the 802.11 Wi-Fi protocol. In particular embodiments, wireless mobile devices 105A-E transmit signals in accordance with the 802.16 WiMax protocol. In particular embodiments, wireless mobile devices transmit signals in accordance with the Bluetooth wireless standard. Although this disclosure describes a particular embodiment utilizing Bluetooth wireless transmissions, other embodiments may utilize any frequency-hopping wireless transmission protocol, including adaptive frequency-hopping spread spectrum (FHSS). Other embodiments may also utilize any wireless transmission protocol regardless of frequency. Mobile devices 105A-E may be any type of wireless mobile device, such as a mobile computer, mobile phone, peripheral, access point, or the like. For the purposes of this disclosure, "mobile device," "wireless device," or "wireless mobile device" comprises any device equipped with a radio capable of interpreting phase information of a radio frequency (RF) signal.

Bluetooth devices utilize FHSS, which segments data and transmits individual portions on up to 79 bands (also referred to as "channels") of 1MHz each, centered from 2402 to 2480 MHz in the unlicensed 2.4 GHz short-range radio frequency band. The pseudo-random channel sequence used in frequency hopping is calculated by the address off the master of a Bluetooth piconet and the master's internal clock. Transmission slots are defined by two clock ticks of the master device's internal clock (312.5 microseconds), thus each transmission slot has a 625 microsecond duration. Therefore, Bluetooth devices have a hop interval of 625 microseconds, and change channels 1600 times per second. The Bluetooth specification defines ten frequency-hopping sequences, five for the 79 MHz channel systems (United States and Europe) and five for the 23 MHz channel systems (Japan, Spain, and France). Although this disclosure describes embodiments with a predetermined hop interval, other embodiments may utilize wireless communication protocols with variable hop intervals. This disclosure contemplates any suitable wireless communication protocol.

Wireless mobile devices 105B-E located in indoor environment 104 may be separated by multiple scattering elements such as walls, fixtures, and other structures. For example, signals from device 105D, located in room 102C, may take multiple paths due to reflection or transmission through attenuating surfaces to other devices 105B, C, and E. This multipath effect limits the efficacy of time of arrival or TDoA multilateration. Absent multipath signal components, the time of arrival may be determined from the autocorrelation function of a spread spectrum signal. Where different frequency bands are utilized for upstream and downstream traffic, such as in Bluetooth, the interference between channels can be significantly isolated. However, as previously described, even absent multipath interference, TDoA in short-range environment requires extremely high-accuracy timers.

Because of the short hop interval of the Bluetooth specification, particular embodiments treat each of wireless mobile devices 105A-E as a stationary receiver that may calculate the position of all the other wireless mobile devices 105A-E based on received signals. For example, wireless mobile device 105D may estimate the distance of wireless mobile devices 105B, C, and E. In particular embodiments, this distance estimation may be utilized for location-based services or social networking. For example, in particular embodiments, wireless mobile devices 105A-E may be associated with a particular user account on a social networking system. When mobile device 105B detects mobile device 105C within a predetermine distance, the social networking system may suggest that the users of the mobile devices 105B and C become friends on the social networking system. In particular embodiments, the distance estimation functionality may be utilized to locate other users within a complex building. This disclosure contemplates any suitable application or use for the estimated distance.

Although each mobile device 105A-E may receive signals from other mobile devices 105A-E (regardless of whether they are connected to the same piconet), to accurately estimate distance for each mobile device 105A-E, each mobile device 105A-E must be able to disambiguate between the received signals; in other words, each of mobile devices 105A-E must be able to associate a received signal at a particular frequency to a unique one of mobile devices 105A-E. In particular embodiments, a specialized wireless frame is utilized that identifies the frame originator. In particular embodiments, a specialized wireless packet format is utilized that identifies the packet originator. In particular embodiments, the originator identifier may be implemented directly above the physical (PHY) layer. This disclosure contemplates the transmission of any suitable identifier associating a received wireless signal to a particular one of wireless mobile devices 105A-E.

In particular embodiments, each of mobile devices 105A-E may generate a signal fingerprint for each received signal. Because the received signal may be site-specific due to its dependence on intervening obstacles, the multipath structure of the channel is unique to every location and may be considered a fingerprint of the signature of the location. However, signal fingerprinting associates signals to locations rather than devices, and as such the association becomes stale relatively quickly if the transmitting device is in motion, or may become inaccurate if multiple devices are in the same general vicinity. In particular embodiments, each of mobile devices 105A-E may keep the signal-to-device association calculated by signal fingerprinting only for a predetermined duration, such as 1 second. In particular embodiments, each of mobile devices 105A-E may associate a received signal fingerprint to a previously received signal fingerprint if the channel varies less than a predetermined amount. In particular embodiments, signal fingerprints may be sent by mobile devices to and stored in a social-networking system in order to generate a centralized repository of maps of indoor environments. This disclosure contemplates any suitable method of associating received signals to particular ones of mobile devices 105A-E.

In particular embodiments, mobile devices 105A-E may receive transmissions from mobile peripherals, such as Bluetooth headset 106. In particular embodiments, the distance estimation system as disclosed may be utilized to aid a user of a mobile device, for example mobile device 105E, to locate a paired mobile peripheral, such as headset 106. In such embodiments, there is obviously no need for a specialized wireless identifier, as the master and slave devices are already paired. This disclosure contemplates any suitable application of estimating the distance between a mobile device 105 and a paired mobile peripheral 106.

In particular embodiments, environment 100 may include fixed-position devices, such as access points 107 or less-mobile peripherals, such as fax machine and printer 108. In particular embodiments, mobile devices 105A-E may use transmissions received from fixed-position devices 107 to determine its own position within environment 100.

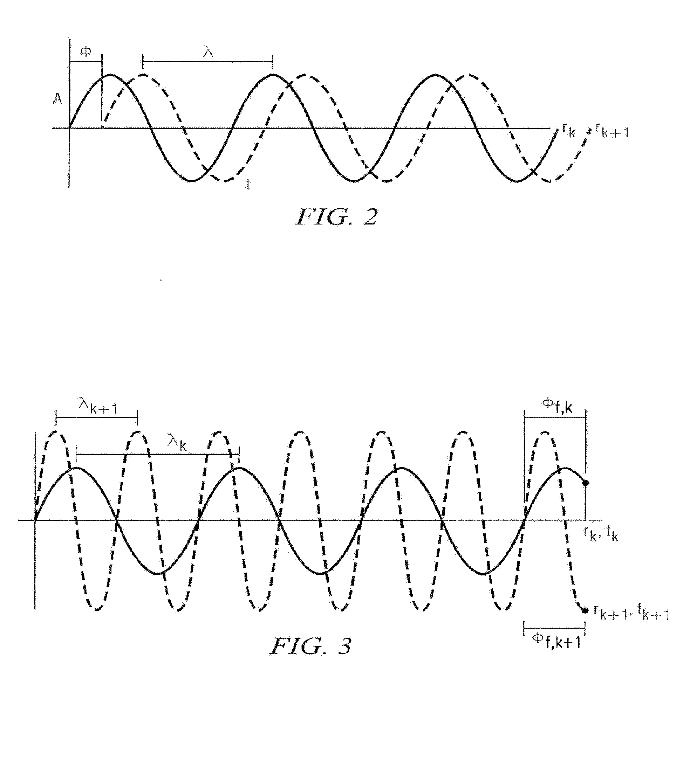

FIGURE 2 illustrates an example time-amplitude plot of two RF signals received by a wireless mobile device 105. For the sake of clarity, only one channel of the quadrature signal is shown. In the example of FIGURE 2, time is plotted on the x-axis and signal amplitude is plotted on the y-axis. At time $t_k$, mobile device 105 receives a signal originating from a point $r_k$ at a frequency f. Similarly, at time $t_{k+1}$, mobile device 105 receives a signal originating from a point $r_{k+1}$. Assuming that the two signals are of the same frequency, the difference in carrier phase between the two signals is $\Phi$.

In the simplified one-dimensional example above, each signal may be represented mathematically as:

$R(x,t) = A\cos(\omega t - kx + \varphi)$, where x is the position, t is time, A is the amplitude of the signal, $\omega$ is the angular frequency of the sinusoidal signal or the carrier frequency, and k is the wavenumber of the signal, where $k = 2\pi / \lambda$.

The formula may be generalized to three dimensions by:

$$R(r,t) = A\cos(\omega t - k \cdot r + \varphi)$$

Where r is the position vector in three-dimensional space, and k is the wave vector. For ease of calculation, this equation may be represented in polar form as:

$$R(r,t) = Ae^{j(\omega t - k \cdot r + \varphi)}$$

Because the wave vector k is related to the wavelength of the signal by the equation, $k = 2\pi / \lambda$, and $\lambda = f/c$, where f is the frequency of the signal and c is the speed of light, the equation above may further simplify to:

$$R(r,t) = Ae^{j(2\pi ft - \frac{2\pi f}{c} \cdot r + \varphi)}$$

$$R(r,t) = Ae^{j(2\pi f(t - \frac{r}{c}) + \varphi)}$$

Furthermore, because the electromagnetic field of a radiating field in spherical coordinates includes an attenuation factor based on spherical position r, the equation may be modified to:

$$R(r,t) = \frac{A}{r}e^{j(2\pi f(t - \frac{r}{c}) + \varphi_f)}$$

Assuming mobile device 105 may collect a time series of phase samples at time $\{t_0, t_1, t_2, t_3, ...,t_k\}$, a signal received by any type of receiver, Bluetooth or otherwise, is:

$$R_i = \sum_l A_{l,i} / r_{l,i} e^{j(2\pi f_i(t_i - r_{l,i}/c) + \phi_{l,f_i})}$$

Where $l$ represents multiple paths the signal could take to reach the receiver, and $i$ represents individual samples. The amplitude of signals modulated via Gaussian frequency shift keying (GFSK) such as Bluetooth signals, differential phase shift keying (DPSK), differential quadrature phase shift keying (DQPSK), such as enhanced data rate (EDR) Bluetooth (using $\pi$/4DQPSK or 8DQPSK), or orthogonal frequency division modulation (OFDM), may be assumed to be reasonably stationary.

In particular embodiments, mobile devices 105 assume other mobile devices 105 are within view; i.e., have line of sight, or are separated by a single wall with light steel reinforcement. In such embodiments, a Rician distribution may be utilized for the scattering/noise model. In particular embodiments, a Rayleigh noise model may be utilized. This disclosure contemplates any suitable noise or scattering model.

FIGURE 3 illustrates a simplified example of two sinusoidal signals received by a hypothetical receiver at a particular location. In FIGURE 3, the solid line represents a first RF signal having frequency $f_k$, wavelength $\lambda_k$, and originating from a point $r_k$. It will be appreciated that when traveling through air, a signal's frequency and wavelength are proportional to the speed of light. The received phase (e.g., the phase in the receiver), $\varphi_k$, includes the integral number $\lambda_k$ between the origin and $r_k$, as well as the fractional phase offset $\varphi_{f,k}$, which represents the phase offset in the system when r=0 (and which may itself be nonzero). Similarly, the dashed line represents a second RF signal having frequency $f_{k+1}$, wavelength $\lambda_{k+1}$, and originating from a point $r_{k+1}$. The phase, $\varphi_{k+1}$, includes the integral number $\lambda_{k+1}$ between the origin and $r_{k+1}$, as well as the fractional phase offset $\varphi_{f,k+1}$.

In particular embodiments, a receiver, such as mobile device 105, may take two received signal measurements from the same signal originator at different frequencies to estimate the distance to the signal originator. The phase of the signal is merely the argument of the complex exponential; thus, ignoring scattered paths, at $t_k$,

$$\varphi_k = \left| \frac{-2\pi f_k r_k}{c} + \varphi_{f_k} \right|$$

Similarly, at $t_{k+1}$,

$$\varphi_{k+1} = \left| \frac{-2\pi f_{k+1} r_{k+1}}{c} + \varphi_{f_{k+1}} \right|$$

For Bluetooth, the frequencies $f_k$ and $f_{k+1}$ are known from the protocol specification or frequency hopping sequence. Assuming that the originating mobile device 105 has not moved significantly from one hop to another (that is, within 625 microseconds), $r_k=r_{k+1}$. Additionally, phase offsets $\varphi_{f,k}$ and $\varphi_{f,k+1}$ may be known a priori. For example, before any measurements are taken, the carrier phase offset may be calibrated and predicted across a range of frequencies in order to produce a priori phase offset information. Therefore, it is possible to solve for the distance $r_k$ to the originating mobile device based on the phases of two received signals at different frequencies:

$$\varphi_{f,k} - \varphi_{f,k+1} = \left| \frac{2\pi f_k r_k}{c} - \frac{2\pi f_{k+1} r_k}{c} \right|$$

$$\varphi_{f,k} - \varphi_{f,k+1} = \left| \frac{2\pi r_k (f_k - f_{k+1})}{c} \right|$$

$$r_k = \left| \frac{c(\varphi_{f,k} - \varphi_{f,k+1})}{2\pi (f_k - f_{k+1})} \right|$$

Phase measurements $\varphi_{f,k}$ and $\varphi_{f,k+1}$ may be susceptible to cycle slips, which may corrupt the range calculation above. As with all digital wireless communications, improper carrier phase synchronization may result in inaccurate received message decoding. In particular embodiments, phase-locked loops and Kalman filtering in the receiver itself may correct for both phase offsets under $2\pi$ radians as well as integral phase offsets. Cycle slips can occur when tracking of carrier phase is interrupted due to blockage of the signal, weak signals due to range or multipath interference, or incorrect signal processing due to receiver software failure. A cycle slip will alter the integer number of cycles, although the fractional phase measurements $\varphi_{f,k}$ and $\varphi_{f,k+1}$ will be the same as if the tracking had not been interrupted. Particular embodiments may utilize discrete Kalman filtering, optimized Cholesky decomposition, or widelaning ambiguity fixing, to correct cycle slips.

In particular embodiments, mobile device 105 may record a number of positions as a time series or utilize a recursive estimator to obtain an average. Because the Bluetooth protocol requires frequency hopping 1600 times per second to avoid interference, the average of many phase samples over that time may be used to obtain a good estimate of the distance. Thus when "listening in" on the communications between two devices communicating via Bluetooth, in a given second, a mobile device 105 may intercept 800 transmissions (on even time slots) from a master mobile device to a slave device, and 800 transmissions (on odd time slots) from a slave device to a master device. In particular embodiments a plurality of secondary factors may be utilized to detect or correct cycle slips.

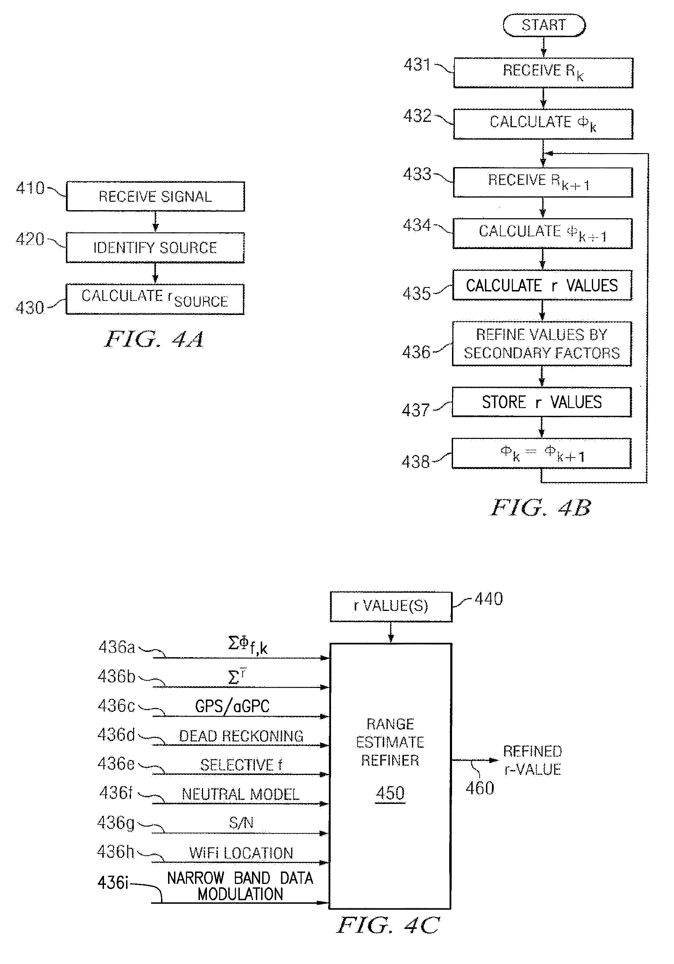

FIGURE 4A illustrates an example method for calculating the distance of a plurality of signal transmitters. The method may start at step 410, where a mobile device 105 receives a new transmission.

At step 420, mobile device 105 associates the received signal with a particular transmitting device. As previously described, particular embodiments associate signals to particular transmitting devices via signal fingerprinting. In particular embodiments, a specialized protocol may be implemented that includes a device identifier. Such a protocol may be implemented directly above the PHY (physical) layer of the network model. In particular embodiments, the protocol may be implemented as a new Bluetooth packet type, in addition to the 13 existing types. In particular embodiments, the protocol may be implemented as an additional field in all existing Bluetooth packet types. For example, Bluetooth packets, which are used by all higher layers to compose higher-level packet data units (PDUs), include a 68/72 bit access code, 54 bit header, and a payload of 0 to 2745 bits. As another example, in the case of Bluetooth Low Energy, packet data units include a 16 bit header and a payload of up to 296 bits. In particular embodiments, the packet payload may include, at a particular location, device identification information such as the Bluetooth device address (BD_ADDR) or device media access control (MAC) address. This disclosure contemplates any suitable device identifier, and any suitable method of conveying the device identifier in wireless transmissions.

In particular embodiments, mobile devices 105A-E may transmit self-determined position information to other wireless devices in each wireless packet. For example, mobile devices 105A-E may include GPS or assisted GPS (aGPS) receivers for self-calculating their own positions. Other devices 105 may self-calculate their position based on the WiFi network to which they are connected. In particular embodiments, mobile devices 105 may include accelerometers and calculate their own positions via, for example, a dead-reckoning algorithm. U.S. Patent Application No. 13/354,804, entitled "Statistics for Continuous Location Tracking," filed 20 January 2012, which is incorporated by reference as an example only and not by way of limitation, discloses an example of using an accelerometer and location sensor on a mobile device to calculate position and acceleration. In particular embodiments, mobile devices 105 may determine their own positions based on communications with one or more reference beacons, such as wireless access points 107 or other fixed-position wireless devices. U.S. Patent Application No. 13/431,842, entitled "Dynamic Geographic Beacons for Geographic-Positioning-Capable Devices," filed 27 March 2012, which is incorporated by reference as an example only and not by way of limitation, discloses examples of identifying a geographic location of a mobile device with positioning signals obtained by cell tower triangulation, Wi-Fi positioning, or GPS positioning. This disclosure contemplates any suitable means of self-determining the position of a mobile device, and transmitting the self-determined position in some or all wireless (Bluetooth or otherwise) transmissions.

At step 430, the receiver calculates the distance of the transmitting mobile device associated with the received signal. In particular embodiments, the receiver (mobile device 105) may calculate a range for every received transmission. A method of calculating the range of a particular signal transmitter in accordance with one embodiment is described with further reference to FIGURE 4B.

FIGURE 4B is a flowchart of an example method of estimating the range of a particular signal transmitter or mobile device. The process begins at step 431, where the receiver or wireless mobile device 105 receives a first signal $R_k$ at a particular frequency defined by the Bluetooth (or other wireless standard) at $f_k$.

At step 432, the receiver calculates the phase, $\varphi_k$, of signal $R_k$. Methods of calculating the phase of a received signal are well-known in the art. In particular embodiments, mobile device 105 may include a quadrature demodulator to obtain carrier phase synchronization. In particular embodiments, mobile device 105 may include a phase-locked loop. In particular embodiments, mobile device 105 may include a squared difference loop. This disclosure contemplates any suitable method of calculating the phase of a received signal. In particular embodiments, calculated phase $\varphi_k$ may be stored in a buffer or register. In particular embodiments, phase $\varphi_k$ may be added to a running average of previously-calculated phases at the same frequency from the same transmitter for a predetermined duration, such as the last five seconds. For example, if a Bluetooth device makes 800 transmissions in a second across 79 channels equally, each channel will be used at least ten times. A receiver or mobile device 105 receiving these signals may take the average of these phase calculations for each frequency, and discard discontinuous phases. In particular embodiments, receiver or mobile device 105 may fit a curve through the received phases for a particular frequency before and after a discontinuity (cycle slip). In particular embodiments, the fit may be obtained from a simple linear regression. In particular embodiments, the fit may be obtained from a least-squares model. In particular embodiments, Kalman filtering may be utilized. In particular embodiments, cycle slips may be repaired by interpolation via the fitted curve. This disclosure contemplates any suitable method of detecting and correcting cycle slips.

At step 433, the receiver or mobile device 105 receives another signal, $R_{k+1}$ at a different frequency, $f_{k+1}$, from the same signal transmitter or mobile device. At step 434, mobile device 105 calculates the phase, $\varphi_{k+1}$, of the second

signal, $R_{k+1}$, in the same manner as in step 432.

At step 435, the receiver or mobile device 105 calculates one or more distance estimates $r_k$ for the distance between itself and the signal originator. In particular embodiments, mobile device 105 may select frequencies having a particular bandwidth or frequency spread to produce a more or less granular measurement. The maximum and minimum ranges (r-values) depends on the frequencies $f_k$ and $f_{k+1}$:

$$r_{\max} = \frac{c}{\left| f_{k+1} - f_k \right|} = c / BW$$

$$r_{\min} = \frac{c}{2^L \left| f_{k+1} - f_k \right|} = \frac{c}{2^L BW}$$

Where c is the speed of light and L is the number of bits describing the phase signal. Thus, for a 28MHz bandwidth, the maximum and minimum r-values are 10.7 m and 8.4 cm, respectively. As another example, for 6 MHz of bandwidth, the maximum measurable distance is 50 m and the minimum measurable distance is 37 cm. Thus, in particular embodiments, the receiver or mobile device 105 may only perform the distance calculation for particular frequencies or frequency ranges.

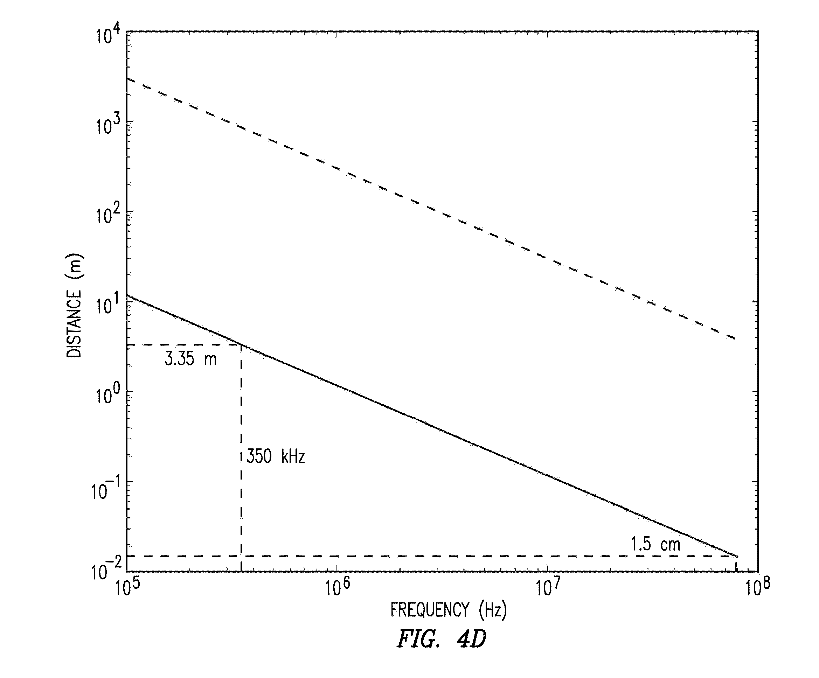

One challenge with using the FHSS system for estimating distance is that measurements are made modulo $2\pi$, that is, one cannot resolve ambiguities of the distance estimate past c/BW, as outlined below. To resolve this issue, an embodiment of this invention is to use multi-resolution frequency hopping to simultaneously maintain high phase resolution for sub-cycle measurements and at least one other frequency hopping resolution to resolve phase ambiguities. In one embodiment used by the Bluetooth protocol, the modulation of data is GFSK; in this modulation, two frequencies are smoothly shifted (to maintain spectral efficiency and compliance) within a channel. In this embodiment, by alternating between the one and zero symbol states, and correspondingly alternating the frequency of the GFSK symbols, a receiver can use this scale of frequency modulated data to resolve the phase ambiguities from the higher resolution FHSS phase information. As an example, assume a Bluetooth system will operate at BW=79 MHz; therefore, the maximum range of $2\pi$ will be c/79 MHz = 3.79 m. If the GFSK maximum frequency deviation for symbols is 350 kHz, then to be able to resolve 3.79 m would require a phase resolution of 0.027 radians, or at least 8 bits of phase resolution. With 8 bits of resolution on the FHSS system, one would ultimately be able to provide approximately 1.5 cm resolution over the full range of the Bluetooth system with no phase slip issues. The use of bit modulation to resolve phase ambiguities is illustrated in FIGURE 4D, in which approximately 1.5 cm of resolution is provided over the full frequency range of the Bluetooth system, while 3.35 m of resolution is provided up to 350 kHz, with 8 bits of phase resolution.

Example code for calculating the phase dynamic range required to resolve phase ambiguities is as follows:

```
from numpy import pi, ceil, log2, log10, logspace
import pylab as pl
c=299792458 # speed of light
BW = 79e6 # in Hz
dF = 350e3 # in Hz, GFSK symbol frequency modulation spacing in Bluetooth
r=c/BW
print('max distance per cycle = %f'%(r))
minphase = 2*pi*r*dF/c
N=ceil(-log2(minphase/2/pi))
print('N bits of phase resolution = %d, phase = %f'°/(N,minphase))
print('min distance at N bits = %f'%(c/dF/2**N))
print('min distance at full FHSS BW = %f'%(C/BW/2**N))
x=logspace(log10(100e3),log10(80e6),500)
y1=c/x
y2=c/x/2**N
pl.ion()
fig=pl.figure(1)
fig.clf()
ax=fig.add_subplot(111)
```

```
ax.loglog(x,y1,'k--' ,x,y2, 'k')
# data modulation phase
ax.axhline(y=c/dF/2.**N, xmin=0, xmax=log10(dF/x[0])/log10(100e6/x[0]),color='k', lines
tyle='--')
ax.axvline(x=dF,ymin=0,ymax=log10(c/dF/2.**N/1e-2)/log10(10e4/10e-2),color='k', lines
tyle='--')
# FHSS modulation
ax.axhline(y=c/BW/2.**N,xmin=0,xmax=log10(BW/x[0])/log10(100e6/x[0]),color='k',lines
tyle='--')
ax.axvline(x=BW,ymin=0,ymax=log10(c/BW/2.**N/1e-2)/log10(10e4/10e-2),color='k',lines
tyle='--')
ax.set_xlabel('frequency (Hz)')
ax.set_ylabel('distance (m)')
pl.savefig('bluetooth-FHSS-and-data-modulation.pdf' ,bbox_inches='tight')
pl.show()
```

At step 436, the receiver or mobile device 105 refines the one or more calculated r-values based on one or more secondary factors to correct for cycle slips. In particular embodiments, the secondary factors may include self-determined location information transmitted from the mobile device from which the signals originated, as previously discussed. In particular embodiments, accumulated phase and calculated r-values may be utilized as secondary factors.

At step 437, the receiver or mobile device may store the refined r-value for use as a secondary factor in the next range calculation. In particular embodiments, the refined r-value is added to a running buffer of previous r-values. In particular embodiments, the refined r-value is added to a running average. Particular embodiments may utilize the refined r-value in a recursive estimator. This disclosure contemplates any suitable method of storing or utilizing the refined r-value.

At step 438, the receiver overwrites $\varphi_k$ with $\varphi_{k+1}$. In particular embodiments, the register or memory location in which $\varphi_k$ is stored is merely overwritten with the value from the memory or register in which $\varphi_{k+1}$ is stored. At step 438, the process returns to Step 433. In particular embodiments, the process continues indefinitely, allowing a receiver or mobile device to constantly estimate the range of other mobile devices in the vicinity. In particular embodiments, the process may terminate at step 438. Particular embodiments may repeat the steps of the method of FIGURE 4B, where appropriate. Moreover, although this disclosure describes and illustrates particular steps of the method of FIGURE 4B as occurring in a particular order, this disclosure contemplates any suitable steps of the method of FIGURE 4B occurring in any suitable order. Furthermore, although this disclosure describes and illustrates particular components, devices, or systems carrying out particular steps of the method of FIGURE 4B, this disclosure contemplates any suitable combination of any suitable components, devices, or systems carrying out any suitable steps of the method of FIGURE 4B.

FIGURE 4C illustrates a method of refining calculated r-values (step 436 of FIGURE 4B) in accordance with one embodiment. One or more calculated range values 440 are fed into a range estimate refiner 450, which refines the one or more range values based on secondary factors 436a-i, and outputs a single refined r-value 460.

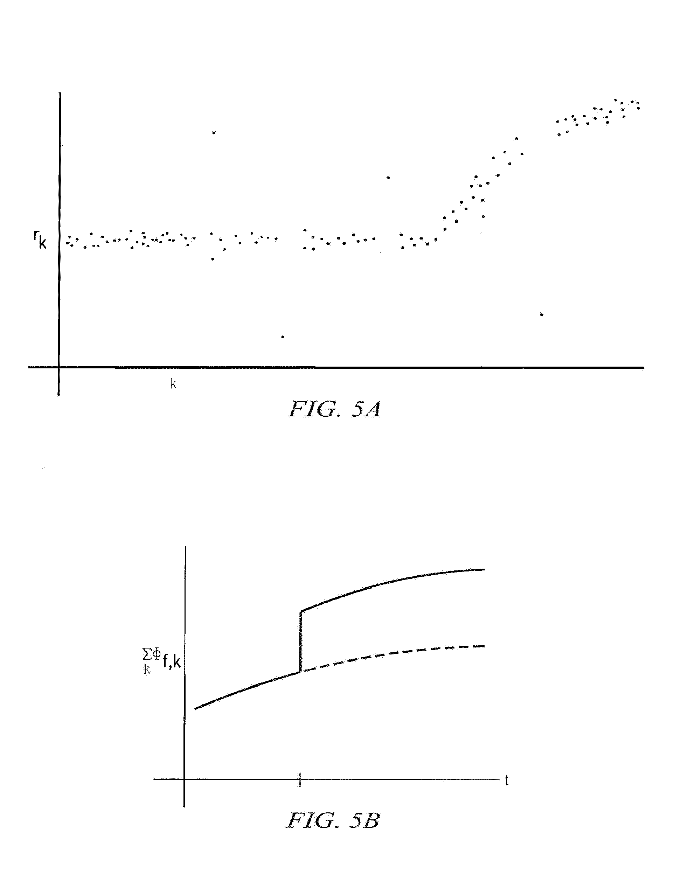

As previously discussed, refiner 450 may utilize one or more secondary factors to refine the r-values. In particular embodiments, refiner 450 accesses a set of predetermined heuristic rules to refine the r-values based on secondary factors. In particular embodiments, refiner 450 may utilize an accumulated calculated phase 436a for a particular frequency. FIGURE 5B illustrates a particular accumulated phase 436a for a given frequency plotted against time. When the carrier is properly synchronized, the total accumulated phase for a given frequency should increase in a smooth curve that has a monotonic relationship with the movement of the device. Large discontinuities as depicted in FIGURE 5B may indicate a cycle slip. This disclosure contemplates any suitable method of detecting and correcting cycle slips based on accumulated phase.

In particular embodiments, refiner 450 may utilize an average r-value 436b. In FIGURE 5A, the calculated r-value 436b is plotted on the y-axis, and the sample number k is plotted on the x-axis. As FIGURE 5A illustrates, the distance calculation may be relatively consistent across multiple samples, but may experience jumps in the calculated distance due to cycle slips. In particular embodiments, discontinuities beyond a certain threshold may be disregarded. In particular embodiments, curve-fitting as utilized to detect cycle slips in the phase measurement may be utilized. This disclosure contemplates any suitable method of storing and using calculated range values to detect and correct cycle slips.

In particular embodiments, refiner 450 may utilize GPS or aGPS location data received from the transmitting mobile device 105A. For example, if the receiver or mobile device 105 calculates an r score that does not comport with the GPS or aGPS data received from the transmitting mobile device and the receiving device's own self-determined location, the r-value may be marked as a cycle slip and tossed out. This disclosure contemplates any suitable method of refining range estimates by received GPS or aGPS location data.

In particular embodiments, receiver or mobile device 105 may utilize the received signal amplitude or signal to noise ratio (S/N or SNR) 436g as a secondary factor. For example, because determining distance via signal strength is relatively effective when the devices are fairly close (within five or six meters), distances calculated via signal strength may override or refine r-values calculated via phase when the distance between the two devices is under six meters. Conversely, where the devices are over six meters apart, distances determined via SNR may be discounted. This disclosure contemplates any suitable method of refining range estimates by SNR.

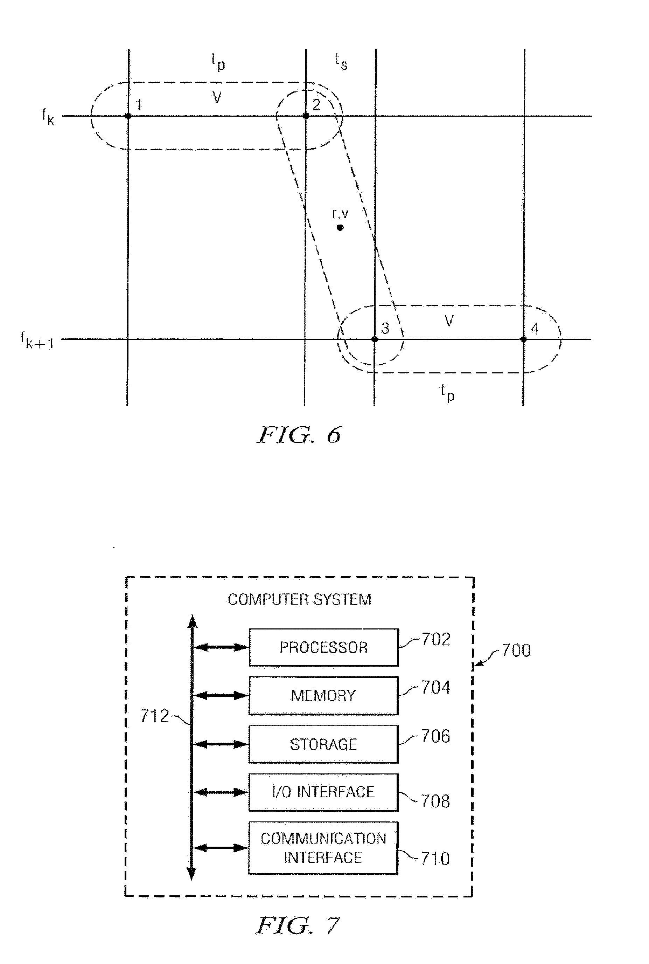

In particular embodiments, a receiver or mobile device 105 may generate an inertial model for estimating the motion of a mobile device or signal transmitter in motion, in particular determine the velocity based on the Doppler effect. In FIGURE 6 this represents an atomic set of operations performed by the radio and signal processing circuitry to estimate both position and velocity of the mobile device. Time is represented along the x-axis, and the vertical axis shows two frequencies $f_k$ and $f_{k+1}$ and what occurs at these frequencies over time. At step 1, the frequency of the receiver is at $f_k$ and the phase is recorded. At step 2, with a change in velocity at the same frequency, the phase will change, and by comparing the time rate of change of the phase, the velocity can be estimated. In order to be able to resolve the velocity to sufficient precision, the time $t_p$ is waited between samples, or many samples may be collected over this interval. After point 2, and over time $t_s$, the transceiver switches the local oscillator (LO) to a new frequency $f_{k+1}$ and makes another phase measurement. At point 4, a fourth phase measurement is made. With all 4 measurements, a combined position and velocity measurement can be made (note only points 1-3 are required at a minimum, and the equation below calculates the velocity and position from these phases---the 4th phase measurement allows one to create a symmetric average of the velocity at the two frequencies, improving the estimate). Note, if a Kalman filter or other mutual estimator is used with other means of obtaining velocity (such as integration of an accelerometer), then this may be combined with the radio-based velocity estimation.

In such embodiments, the equation of motion of a mobile device or signal transmitter may be assumed to be:

$$r(t) = r_0 - v(t_p + t_s / 2) + vt$$

$$v_{1-2} \approx v = \lambda_k (\varphi_2 - \varphi_1) / t_p$$

$$r_0 = \left| \frac{c(\varphi_3 - \varphi_2 + \pi t_s / t_p (\varphi_2 - \varphi_1))}{2\pi (f_{k+1} - f_k)} \right|$$

Particular embodiments may be implemented on one or more computer systems. FIGURE 7 illustrates an example computer system 700. In particular embodiments, one or more computer systems 700 perform one or more steps of one or more methods described or illustrated herein. In particular embodiments, one or more computer systems 700 provide functionality described or illustrated herein. In particular embodiments, software running on one or more computer systems 700 performs one or more steps of one or more methods described or illustrated herein or provides functionality described or illustrated herein. Particular embodiments include one or more portions of one or more computer systems 700.

This disclosure contemplates any suitable number of computer systems 700. This disclosure contemplates computer system 700 taking any suitable physical form. As example and not by way of limitation, computer system 700 may be an embedded computer system, a system-on-chip (SOC), a system-inpackage (SIP), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a smartphone, a tablet, a personal digital assistant (PDA), a watch or wearable device, a server, or a combination of two or more of these. Where appropriate, computer system 700 may include one or more computer systems 700; be unitary or distributed; span multiple locations; span multiple machines; or reside in a cloud, which may include one or more cloud components in one or more networks. Where appropriate, one or more computer systems 700 may perform without substantial spatial or temporal limitation one or more steps of one or more methods described or illustrated herein. As an example and not by way of limitation, one or more computer systems 700 may perform in real time or in batch mode one or more steps of one or more methods described or illustrated herein. One or more computer systems 700 may perform at different times or at different locations one or more steps of one or more methods described or illustrated herein, where appropriate.

In particular embodiments, computer system 700 includes a processor 702, memory 704, storage 706, an input/output (I/O) interface 708, a communication interface 710, and a bus 712. Although this disclosure describes and illustrates a particular computer system having a particular number of particular components in a particular arrangement, this disclosure contemplates any suitable computer system having any suitable number of any suitable components in any suitable arrangement.

In particular embodiments, processor 702 includes hardware for executing instructions, such as those making up a computer program. As an example and not by way of limitation, to execute instructions, processor 702 may retrieve (or fetch) the instructions from an internal register, an internal cache, memory 704, or storage 706; decode and execute them; and then write one or more results to an internal register, an internal cache, memory 704, or storage 706. In particular embodiments, processor 702 may include one or more internal caches for data, instructions, or addresses. This disclosure contemplates processor 702 including any suitable number of any suitable internal caches, where appropriate. As an example and not by way of limitation, processor 702 may include one or more instruction caches, one or more data caches, and one or more translation lookaside buffers (TLBs). Instructions in the instruction caches may be copies of instructions in memory 704 or storage 706, and the instruction caches may speed up retrieval of those instructions by processor 702. Data in the data caches may be copies of data in memory 704 or storage 706 for instructions executing at processor 702 to operate on; the results of previous instructions executed at processor 702 for access by subsequent instructions executing at processor 702 or for writing to memory 704 or storage 706; or other suitable data. The data caches may speed up read or write operations by processor 702. The TLBs may speed up virtual-address translation for processor 702. In particular embodiments, processor 702 may include one or more internal registers for data, instructions, or addresses. This disclosure contemplates processor 702 including any suitable number of any suitable internal registers, where appropriate. Where appropriate, processor 702 may include one or more arithmetic logic units (ALUs); be a multi-core processor; or include one or more processors 702. Although this disclosure describes and illustrates a particular processor, this disclosure contemplates any suitable processor.

In particular embodiments, memory 704 includes main memory for storing instructions for processor 702 to execute or data for processor 702 to operate on. As an example and not by way of limitation, computer system 700 may load instructions from storage 706 or another source (such as, for example, another computer system 700) to memory 704. Processor 702 may then load the instructions from memory 704 to an internal register or internal cache. To execute the instructions, processor 702 may retrieve the instructions from the internal register or internal cache and decode them. During or after execution of the instructions, processor 702 may write one or more results (which may be intermediate or final results) to the internal register or internal cache. Processor 702 may then write one or more of those results to memory 704. In particular embodiments, processor 702 executes only instructions in one or more internal registers or internal caches or in memory 704 (as opposed to storage 706 or elsewhere) and operates only on data in one or more internal registers or internal caches or in memory 704 (as opposed to storage 706 or elsewhere). One or more memory buses (which may each include an address bus and a data bus) may couple processor 702 to memory 704. Bus 712 may include one or more memory buses, as described below. In particular embodiments, one or more memory management units (MMUs) reside between processor 702 and memory 704 and facilitate accesses to memory 704 requested by processor 702. In particular embodiments, memory 704 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 704 may include one or more memories 704, where appropriate. Although this disclosure describes and illustrates particular memory, this disclosure contemplates any suitable memory.

In particular embodiments, storage 706 includes mass storage for data or instructions. As an example and not by way of limitation, storage 706 may include an HDD, a floppy disk drive, flash memory, an optical disc, a magneto-optical disc, magnetic tape, or a Universal Serial Bus (USB) drive or a combination of two or more of these. Storage 706 may include removable or non-removable (or fixed) media, where appropriate. Storage 706 may be internal or external to computer system 700, where appropriate. In particular embodiments, storage 706 is non-volatile, solid-state memory. In particular embodiments, storage 706 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 706 taking any suitable physical form. Storage 706 may include one or more storage control units facilitating communication between processor 702 and storage 706, where appropriate. Where appropriate, storage 706 may include one or more storages 706. Although this disclosure describes and illustrates particular storage, this disclosure contemplates any suitable storage.

In particular embodiments, I/O interface 708 includes hardware, software, or both providing one or more interfaces for communication between computer system 700 and one or more I/O devices. Computer system 700 may include one or more of these I/O devices, where appropriate. One or more of these I/O devices may enable communication between a person and computer system 700. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 708 for them. Where appropriate, I/O interface 708 may include one or more device or software drivers enabling processor 702 to drive one or more of these I/O devices. I/O interface 708 may include one or more I/O interfaces 708, where appropriate. Although this disclosure describes and illustrates a particular I/O interface, this disclosure contemplates any suitable I/O interface.

In particular embodiments, communication interface 710 includes hardware, software, or both providing one or more interfaces for communication (such as, for example, packet-based communication) between computer system 700 and one or more other computer systems 700 or one or more networks. As an example and not by way of limitation, communication interface 710 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 710 for it. As an example and not by way of limitation, computer system 700 may communicate with an ad hoc network, a personal area network (PAN), a local area network (LAN), a wide area network (WAN), a metropolitan area network (MAN), or one or more portions of the In-ternet or a combination of two or more of these. One or more portions of one or more of these networks may be wired or wireless. As an example, computer system 700 may communicate with a wireless PAN (WPAN) (such as, for example, a BLUETOOTH WPAN or RFID WPAN), a WI-FI network, a WI-MAX network, a cellular telephone network (such as, for example, a Global System for Mobile Communications (GSM) network), or other suitable wireless network or a combination of two or more of these. Computer system 700 may include any suitable communication interface 710 for any of these networks, where appropriate. Communication interface 710 may include one or more communication interfaces 710, where appropriate. Although this disclosure describes and illustrates a particular communication interface, this disclosure contemplates any suitable communication interface.

In particular embodiments, bus 712 includes hardware, software, or both coupling components of computer system 700 to each other. As an example and not by way of limitation, bus 712 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCI-X) bus, a serial advanced technology attachment (SATA) bus, a Video Electronics Standards Association local (VLB) bus, or another suitable bus or a combination of two or more of these. Bus 712 may include one or more buses 712, where appropriate. Although this disclosure describes and illustrates a particular bus, this disclosure contemplates any suitable bus or interconnect.

Herein, reference to a computer-readable storage medium or media may include one or more semiconductor-based or other integrated circuits (ICs) (such, as for example, a field-programmable gate array (FPGA) or an application-specific IC (ASIC)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards, SECURE DIGITAL drives, or any other suitable computer-readable storage medium or media), or any suitable combination of two or more of these, where appropriate. A computer-readable non-transitory storage medium or media may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

This disclosure encompasses all changes, substitutions, variations, alterations, and modifications to the example embodiments herein that a person having ordinary skill in the art would comprehend. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

**Claims**

1. A method comprising, in particular by one or more computer systems:

   at each of a plurality of first instances of time, determining a phase ($\varphi_k$) of a first signal ($R_k$) at a first frequency ($f_k$) from a transmitter (105A-E);
   at each of a plurality of second instances of time, determining a phase ($\varphi_{k+1}$) of a second signal ($R_{k+1}$) at a second frequency ($f_{k+1}$) from the transmitter (105A-E); and
   determining a position (r) and/or velocity (v) of the transmitter based at least in part on the phases ($\varphi_k$, $\varphi_{k+1}$) of the first and second signals ($R_k$, $R_{k+1}$) at the first and second instances of time.

2. The method of Claim 1, wherein:

   determining the phase of the first signal at the first frequency from the transmitter comprises resolving an ambiguity in the phase of the first signal based on a modulation of the first signal;
   determining the phase of the second signal at the second frequency from the transmitter comprises resolving an ambiguity in the phase of the second signal based on a modulation of the second signal; and
   the modulation of each of the first and second signals is preferably Gaussian frequency shift keying (GFSK), e.g. Bluetooth signals, differential phase shift keying (DPSK), differential quadrature phase shift keying (DQPSK), e.g. enhanced data rate (EDR) Bluetooth, or orthogonal frequency division modulation (OFDM).

3. The method of Claim 1 or Claim 2, wherein determining a position and/or velocity of the transmitter comprises using a recursive estimator.

4. The method of any of Claims 1 to 3, wherein the modulation of the first and second signals contains a balanced time at each frequency subcarrier.

5. The method of any of the preceding Claims, wherein position estimate values (r) or position range values ($r_{max}$, $r_{min}$) are calculated from the determined phases ($\varphi_k$, $\varphi_{k+1}$) of the first and second signals ($R_k$, $R_{k+1}$) at the first and second instances of time and the position estimate values are refined by means of at least one secondary factor, in particular by a set of predetermined heuristic rules and/or to correct for cycle slips.

6. The method of Claim 5, wherein the position estimate or range values comprise a maximum position value ($r_{max}$) and a minimum position value ($r_{min}$) and preferably the values in between the maximum and the minimum value, wherein preferably the maximum position value ($r_{max}$) corresponds to the speed of light divided either by a given frequency bandwidth or by the difference of the bigger or the maximum frequency of the signals and the smaller or minimum frequency of the signals and wherein preferably the minimum position value ($r_{min}$) corresponds to the maximum position value ($r_{max}$) divided by $2^L$ wherein L is the number of bits describing the phase signal.

7. The method of Claim 5 or Claim 6, wherein the at least one secondary factor is at least one of:

   previously calculated and stored position estimate or range values, in particular to detect and correct cycle slips, and/or in particular in a recursive estimator,
   self-determined location information obtained by the receiver and/or transmitter, in particular by GPS, wherein in particular if the estimate or range value does not comport with the GPS data received from the transmitter and the receiver's own self-determined location, the value may be marked as a cycle slip and tossed out,
   signal amplitude or signal to noise ratio (S/N or SNR), wherein for example, because determining distance via signal strength is relatively effective when the transmitter and receiver devices are fairly close (within five or six meters), distances calculated via signal strength may override or refine estimate or range values calculated via phase when the distance between the two devices is under six meters and, conversely, where the devices are over six meters apart, distances determined via SNR may be discounted,
   an accumulated calculated phase for a particular frequency, wherein in particular when the carrier is properly synchronized, the total accumulated phase for a given frequency should increase in a smooth curve that has a monotonic relationship with the movement of the device and large discontinuities may indicate a cycle slip.

8. The method of any of the preceding Claims, further comprising:

at each of a plurality of third instances of time, determining a phase of a third signal at a third frequency from the transmitter, wherein preferably the third instances of time are separated by a third predetermined amount of time, , e.g. in a range between 10 microseconds and 100 milliseconds, and/or wherein preferably the modulation of the third signal contains a balanced time at each frequency subcarrier.

9. The method of Claim 8, determining the phase of the third signal comprising resolving an ambiguity in the phase of the third signal based on a modulation of the third signal, wherein the modulation of the third signal is preferably Gaussian frequency shift keying (GFSK), e.g. Bluetooth signals, differential phase shift keying (DPSK), differential quadrature phase shift keying (DQPSK), e.g. enhanced data rate (EDR) Bluetooth, or orthogonal frequency division modulation (OFDM) and preferably uses the Bluetooth protocol; and
determining a position or velocity (v) of the transmitter based at least in part on the phases ($\varphi_k$, $\varphi_1$, $\varphi_2$, $\varphi_3$) of the first, second, and third signals at the first, second, and third instances of time.

10. The method of Claim 8 or Claim 9, wherein determining a velocity of the transmitter comprises calculating a symmetric average of the velocity of the transmitter based at least in part on the phases of the first, second, and third signals at the first, second, and third instances of time.

11. The method of any of the preceding Claims, wherein:

the first instances of time are separated by a first predetermined amount of time, e.g. in a range between 10 microseconds and 100 milliseconds, and
the second instances of time are separated by a second predetermined amount of time, e.g. in a range between 10 microseconds and 100 milliseconds.

12. The method of any of Claims 1 to 11, wherein determining a velocity of the transmitter comprises using radio-based doppler estimation.

13. The method of any of Claims 1 to 12, wherein the position of the transmitter is determined based at least in part on one or more of:

a GPS or GLONAS position estimate;
a WiFi position estimate;
accelerometer, gyroscope or magnetometer information;
a past history of phase information;
a past history of position or velocity estimates; and
a past history of signal-to-noise ratios.

14. The method of any of Claims 1 to 13, wherein said signals are received by the same receiver and the position determined is a relative position or a distance of the transmitter relative to the receiver or wherein said signals are received by at least three receivers and the position determined is an absolute position of the transmitter derived from or resulting from its relative positions relative to the receivers.

15. A computing system, comprising:

a memory comprising instructions executable by one or more processors; and
the one or more processors coupled to the memory and operable to execute the instructions, the one or more processors being operable when executing the instructions to perform a method according to any of Claims 1 to 14.

FIG. 1

FIG. 2

FIG. 3

FIG. 4A

FIG. 4B

FIG. 4C

FIG. 4D

*FIG. 5A*

*FIG. 5B*

FIG. 6

FIG. 7

Europäisches
Patentamt

European
Patent Office

Office européen
des brevets

# EUROPEAN SEARCH REPORT

Application Number

EP 13 18 9885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/160697 A1 (INNOVATIONSZENTRUM FUER TELEKOMMUNIKATIONSTECHNIK GMBH IZT [DE]; PERTH) 29 December 2011 (2011-12-29) <br> * page 33, line 29 - page 34, line 14; figure 2 * <br> * abstract * <br> * page 9, line 6 - line 9 * <br> * page 16, line 17 - line 31 * <br> * page 12, line 11 - page 13, line 6 * <br> * page 32, line 7 - line 10; figures 9, 10 * <br> * page 4, line 22 - page 5, line 5 * <br> ----- | 1-15 | INV.<br>G01S5/02<br>G01S5/04 |
| X | US 2008/316105 A1 (SEONG NAK-SEON [KR] ET AL) 25 December 2008 (2008-12-25) <br> * abstract * <br> * paragraphs [0010], [0035], [0055]; figures 2, 3 * <br> ----- | 1-15 | |
| X | US 5 870 056 A (FOWLER MARK L [US]) 9 February 1999 (1999-02-09) <br> * abstract; figures 1, 4 * <br> * column 5, line 12 - line 22 * <br> * column 9, line 23 - line 30 * <br> * column 8, line 44 - line 51 * <br> ----- | 1,3-8, 10-15 | **TECHNICAL FIELDS SEARCHED** (IPC) <br><br> G01S |

The present search report has been drawn up for all claims

| Place of search | Date of completion of the search | Examiner |
|---|---|---|
| Munich | 30 January 2014 | Beer, Mark |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 18 9885

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2014

| Patent document cited in search report | | Publication date | Patent family member(s) | | Publication date |
|---|---|---|---|---|---|
| WO 2011160697 | A1 | 29-12-2011 | EP<br>US<br>WO | 2585846 A1<br>2013106657 A1<br>2011160697 A1 | 01-05-2013<br>02-05-2013<br>29-12-2011 |
| US 2008316105 | A1 | 25-12-2008 | KR<br>US | 20070064255 A<br>2008316105 A1 | 20-06-2007<br>25-12-2008 |
| US 5870056 | A | 09-02-1999 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 35480412 A
- US 43184212 A